# EUROPEAN PATENT APPLICATION

(11) **EP 4 659 855 A1**
(43) Date of publication of application: **10.12.2025**
(21) Application number: 23919909.4
(22) Date of filing: 01.12.2023
(51) Int. Cl.: B01J 20/30, B01J 20/06

(54) **METHOD FOR PRODUCING LITHIUM ADSORBENT PRECURSOR AFTER ROASTING, AND METHOD FOR PRODUCING GRANULATED BODY FOR LITHIUM ADSORPTION**

(30) Priority: 31.01.2023 JP 2023013488
(71) Applicant: Sumitomo Metal Mining Co., Ltd., Tokyo 105-8716 (JP)
(72) Inventor: MATSUMOTO, Shin-ya, Niihama-shi, Ehime 792-0002 (JP); TAKANO, Masatoshi, Niihama-shi, Ehime 792-0002 (JP); MAEDA, Kyohei, Niihama-shi, Ehime 792-0002 (JP)
(74) Representative: Jones, Nicholas Andrew
(86) International application number: PCT/JP2023/043143
(87) International publication number: WO 2024/161774

(57) **Abstract**

To provide a method for producing a lithium adsorbent precursor after roasting that contains much tetravalent manganese having low solubility to water. The method for producing the lithium adsorbent precursor after roasting includes an oxidation roasting step of performing oxidation roasting on powdery lithium adsorbent precursor containing manganese at 300°C or more and 600°C or less to obtain powdery lithium adsorbent precursor after roasting. Performing the oxidation roasting on the powdery lithium adsorbent precursor containing the manganese at the predetermined temperature allows converting divalent manganese into tetravalent manganese. Since the tetravalent manganese has low solubility to water, when the lithium adsorbent is used, dissolution of the lithium adsorbent into water can be reduced.

## Description

### BACKGROUND

### 1. Technical Field

The present invention relates to a method for producing a lithium adsorbent precursor after roasting and a method for producing a granulated body for lithium adsorption. More specifically, the present invention relates to a method for producing a lithium adsorbent precursor after roasting that performs oxidation roasting on powdery lithium adsorbent precursor and a method for producing a granulated body for lithium adsorption that contains a lithium adsorbent precursor after roasting.

### 2. Related Art

In Non-Patent Document 1, a lithium recovery system from brine is disclosed. This document discloses until high purity Li₂CO₃ is generated by adsorbing lithium from brine using a lithium adsorbent and desorbing the adsorbed lithium. This document describes that the lithium is adsorbed by column method.

Patent Document 1 discloses a method for producing formed bodies used in a column. Patent Document 1 discloses the method for producing formed bodies from a lithium adsorbent precursor and an inorganic binder, such as alumina or silica, or a method for producing formed bodies from a lithium adsorbent precursor and an organic binder of chitin or polyvinyl chloride.

### Citation List

### Patent Literature

Patent Document 1: WO 2011/058841Non-Patent Literature
Non-Patent Document 1: Tang Weiping, "Lithium Recovery System from Brine," [online], June 11, 2010, Kagawa Industry Support Foundation, [December 14th, 2023], Internet (https://www.kagawa-isf.jp/wp-content/uploads/2022/02/21tang.pdf)

### SUMMARY

Nevertheless, in the case of the formed bodies using the inorganic binder produced by the method described in PATENT DOCUMENT 1, there is a problem that a specific surface area is reduced as sintering progresses, thereby reducing the adsorption capability.

In the case of the formed bodies using the organic binder produced by the method described in PATENT DOCUMENT 1, there is a problem that the organic binder is eluted in an elution step with an acidic liquid. Accordingly, there is a problem that a repeated use of the formed bodies collapses the formed bodies to reduce the adsorbent and obstruct the column with generated powder.

In addition, regarding the organic binder, after the organic binder is formed to be a formed body, when a high temperature around 500°C is added, the organic binder is carbonized, and thus a high temperature cannot be added after forming. In a case where the lithium adsorbent contains manganese, when a high temperature cannot be added, there is a problem that divalent manganese cannot be oxidized to tetravalent manganese having low solubility to water.

In consideration of the circumstances, an object of the present invention is to provide a method for producing a lithium adsorbent precursor after roasting that contains much tetravalent manganese having low solubility to water and a method for producing a granulated body for lithium adsorption in which adsorption capability is high, a granulated body is more robust, and a shape is easily maintained.

A method for producing a lithium adsorbent precursor after roasting of a first invention includes an oxidation roasting step of performing oxidation roasting on powdery lithium adsorbent precursor containing manganese at 300°C or more and 600°C or less to obtain powdery lithium adsorbent precursor after roasting.

In the method for producing the lithium adsorbent precursor after roasting of a second invention in the first invention, a temperature of the oxidation roasting in the oxidation roasting step is 450°C or more and 550°C or less.

The method for producing the granulated body for lithium adsorption of a third invention includes: a kneading step of kneading the lithium adsorbent precursor after roasting produced in the production method of the first invention or the second invention, an organic binder, and a hardening agent for accelerating hardening of the organic binder to obtain a kneaded product; a granulating step of granulating the kneaded product to obtain a granulated body; and a baking step of baking the granulated body at 90°C or more and 120°C or less to obtain a granulated body for lithium adsorption.

The method for producing the granulated body for lithium adsorption of a fourth invention in the third invention includes a drying step of drying the granulated body at 10°C or more and 60°C or less after the granulating step and before the baking step.

In the method for producing the granulated body for lithium adsorption of a fifth invention in the third invention or the fourth invention, the organic binder is copolyester.

In the method for producing the granulated body for lithium adsorption of a sixth invention in any of the third invention to the fifth invention, the hardening agent is polyisocyanate.

In the method for producing the granulated body for lithium adsorption of a seventh invention in any of the third invention to the sixth invention, the organic binder is 5 weight% or more and 20 weight% or less of the powder of the lithium adsorbent precursor after roasting.

According to the first invention, performing oxidation roasting on the powdery lithium adsorbent precursor containing the manganese at the predetermined temperature allows converting divalent manganese into tetravalent manganese. Since the tetravalent manganese has low solubility to water, when the lithium adsorbent is used, dissolution of the lithium adsorbent into water can be reduced.

According to the second invention, the temperature of the oxidation roasting of 450°C or more and 550°C or less allows converting the divalent manganese into the tetravalent manganese and also allows highly maintaining the adsorption capability of the lithium.

According to the third invention, the kneading step of kneading by including the organic binder and the hardening agent and the baking step of baking a first granulated body in the baking step to obtain a second granulated body are included, and therefore the granulated body for lithium adsorption in which the adsorption capability is high, the granulated body is robust, and the shape of the granulated body is easily maintained can be obtained.

According to the fourth invention, the drying step of drying the granulated body at the predetermined temperature is provided before the baking step, and therefore the granulated body can be put to the baking step with a small amount of water content in the granulated body, thereby obtaining the more robust granulated body.

According to the fifth invention, the organic binder is copolyester, and therefore the elution in the acidic liquid can be further reduced, thereby obtaining the more robust granulated body.

According to the sixth invention, the hardening agent is polyisocyanate, and therefore a bonding strength of the organic binder can be further increased, thereby obtaining the more robust granulated body.

According to the seventh invention, the kneaded organic binder is 5 weight% or more and 20 weight% or less of the powder of the lithium adsorbent precursor, and therefore the adsorption capability of the lithium adsorbent can be maintained at high.

### BRIEF DESCRIPTION OF DRAWINGS

Fig. 1 is a graph representing a relationship between sintering temperatures and elution amounts of manganese of lithium adsorbent precursors;
Fig. 2 is a graph representing a relationship between sintering temperatures and adsorption amounts of lithium of the lithium adsorbent precursors;
Fig. 3 is a flowchart of a method for producing a granulated body for lithium adsorption according to a first embodiment of the present invention;
Fig. 4 is a flowchart of a method for producing a granulated body for lithium adsorption according to a second embodiment of the present invention;
Fig. 5 is a graph representing differences in adsorption amount of lithium depending on binders; and
Fig. 6 is a graph representing transitions of decrease in granulated bodies.

### DETAILED DESCRIPTION

Next, embodiments of the present invention will be described based on the drawings. However, the embodiments described below are to exemplarily describe a method for producing a lithium adsorbent precursor after roasting and a method for producing a granulated body for lithium adsorption for embodying a technical idea of the present invention, and the present invention does not specify the method for producing the lithium adsorbent precursor after roasting or the method for producing the granulated body for lithium adsorption as the following.

The method for producing the lithium adsorbent precursor after roasting according to the present invention includes an oxidation roasting step of performing oxidation roasting on powdery lithium adsorbent precursor containing manganese at 300°C or more and 600°C or less to obtain powdery lithium adsorbent precursor after roasting.

Performing oxidation roasting on the powdery lithium adsorbent precursor containing the manganese at the predetermined temperature allows converting divalent manganese into tetravalent manganese. Since the tetravalent manganese has low solubility to water, when the lithium adsorbent is used, dissolution of the lithium adsorbent into water can be reduced.

Additionally, in the method for producing the lithium adsorbent precursor after roasting according to the present invention, a temperature of the oxidation roasting in the oxidation roasting step is 450°C or more and 550°C or less. The temperature of the oxidation roasting of 450°C or more and 550°C or less allows converting the divalent manganese into the tetravalent manganese and also allows highly maintaining the adsorption capability of the lithium.

The method for producing the granulated body for lithium adsorption according to the present invention includes: a kneading step of kneading the lithium adsorbent precursor after roasting, an organic binder, and a hardening agent for accelerating hardening of the organic binder to obtain a kneaded product; a granulating step of granulating the kneaded product to obtain a granulated body; and a baking step of baking the granulated body at 90°C or more and 120°C or less to obtain a granulated body for lithium adsorption.

The method for producing the granulated body for lithium adsorption includes the kneading step of kneading by including the organic binder and the hardening agent and the baking step of baking the granulated body in the baking step to obtain the granulated body for lithium adsorption, and therefore the granulated body for lithium adsorption in which the adsorption capability is high and the shape of the granulated body is easily maintained can be obtained.

The method for producing the granulated body for lithium adsorption according to the present invention preferably includes a drying step of drying the granulated body at 10°C or more and 60°C or less after the granulating step and before the baking step. Therefore, the granulated body can be put to the baking step with a small amount of water content in the granulated body, thereby obtaining the more robust granulated body.

In the method for producing the granulated body for lithium adsorption according to the present invention, the organic binder is preferably copolyester. This allows further reducing the elution in the acidic liquid, thereby obtaining the more robust granulated body.

In the method for producing the granulated body for lithium adsorption according to the present invention, the hardening agent is preferably polyisocyanate. This allows further increasing a bonding strength of the organic binder, thereby obtaining the more robust granulated body.

In the method for producing the granulated body for lithium adsorption according to the present invention, the organic binder is preferably 5 weight% or more and 20 weight% or less of the powder of the lithium adsorbent precursor. This allows maintaining the adsorption capability of the lithium adsorbent at high.

### <Embodiments of Method for Producing Lithium Adsorbent Precursor after Roasting> (Lithium Adsorbent Precursor)

The lithium adsorbent is not particularly limited as long as it contains manganese and selectively adsorbs lithium from a lithium-containing solution. Examples of the lithium adsorbent include H_{1.6}Mn_{1.6}O₄, H_{1.33}Mn_{1.67}O₄, and the like obtained from lithium manganese oxide. These lithium adsorbents are preferably produced by wet production method. This is because that the wet production method facilitates obtaining the lithium adsorbent in the form of powder at the production phase. However, the production method is not limited to this, and the lithium adsorbent produced by dry production method does not cause a problem. The lithium adsorbent can be obtained by replacing Li with hydrogen in Li_{1.6}Mn_{1.6}O₄ and Li_{1.33}Mn_{1.67}O₄, which are the lithium adsorbent precursors, as in Formulae 1 and 2.

[Formula 1] Li_{1.6}Mn_{1.6}O₄ + 1.6HCl → H_{1.6}Mn_{1.6}O₄ + 1.6LiCl

[Formula 2] Li_{1.33}Mn_{1.67}O₄ + 1.33HCl → H_{1.33}Mn_{1.67}O₄ + 1.33LiCl

### (Oxidation Roasting Step)

The lithium adsorbent precursor contains a substance having a composition not sufficiently oxidized in some cases. Therefore, the method for producing the lithium adsorbent precursor after roasting according to this embodiment includes the oxidation roasting step. In the oxidation roasting step, oxidation roasting is performed on the powdery lithium adsorbent precursor containing manganese at 300°C or more and 600°C or less to obtain the lithium adsorbent precursor after roasting. The oxidation roasting step, for example, employs an electric furnace or the like. An oxidation roasting time is, for example, preferably 2 hours or more and 24 hours or less. An atmosphere inside the furnace of the electric furnace does not cause a problem as long as oxygen is present. For example, supplying an atmospheric air to the inside of the furnace allows setting a preferred atmosphere. To accelerate the oxidation roasting, the temperature inside the furnace is preferably 300°C or more and 600°C or less as described above. Additionally, considering the capability of lithium adsorption after the oxidation roasting, the temperature is further preferably 450°C or more and 550°C or less.

Performing oxidation roasting on the powdery lithium adsorbent precursor containing the manganese at the predetermined temperature allows converting divalent or trivalent manganese into tetravalent manganese. With an example of Li_{0.8}Mn_{1.8}O_{3.5} as a compound containing divalent or trivalent manganese contained in the lithium adsorbent precursor, the reaction is as in Formula 3. Since the tetravalent manganese has low solubility to water, when the lithium adsorbent is used, dissolution of the lithium adsorbent into water can be reduced.

[Formula 3] 4Li_{0.8}Mn_{1.8}O_{3.5} + O₂ → 2Li_{1.6}Mn_{1.6}O₄ + 4MnO₂

Additionally, in the method for producing the lithium adsorbent precursor after roasting according to the present invention, in the oxidation roasting step, the temperature of the oxidation roasting is 450°C or more and 550°C or less. With the temperature of the oxidation roasting of 450°C or more and 550°C or less allows converting the divalent manganese into the tetravalent manganese and also allows highly maintaining the adsorption capability of the lithium.

### <First Embodiment of Method for Producing Granulated Body for Lithium Adsorption>

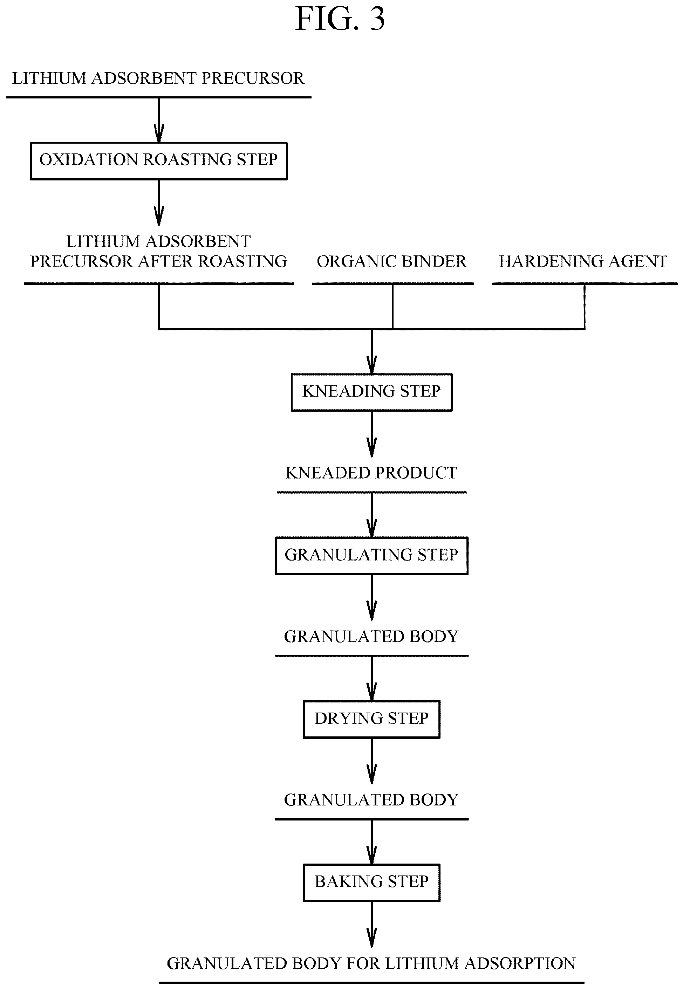

Fig. 3 illustrates a flowchart of the method for producing the granulated body for lithium adsorption according to the first embodiment of the present invention. The powder of the lithium adsorbent precursor is used in the oxidation roasting step of the method for producing the lithium adsorbent precursor after roasting and the obtained lithium adsorbent precursor after roasting is used in the kneading step described later.

### (Organic Binder)

The organic binder is used in the kneading step. For example, copolyester as one of polyesters, chitin, PVC, and the like correspond to the organic binder, and the copolyester is preferred. The organic binder being the copolyester allows further reducing the elution in an acidic liquid, thereby obtaining the more robust granulated body.

### (Hardening Agent)

The hardening agent is used in the kneading step. The hardening agent is used for accelerating hardening of the organic binder. "Accelerating hardening" means for the organic binder to have a further enhanced effect as a binder, such as to have a harder finish and to have faster hardening. There are a variety of hardening agents, and polyisocyanate is preferred. Furthermore, hexamethylene diisocyanate-based polyisocyanate is preferred. The hardening agent being the polyisocyanate allows further increasing a bonding strength of the organic binder, thereby obtaining the more robust granulated body.

### (Kneading Step)

When a production method for obtaining a lithium-containing solution, which contains lithium, from the lithium adsorbent is achieved on a commercial basis, the most appropriate method is to granulate the lithium adsorbent, house it within a predetermined container, and pass an acid solution, such as hydrochloric acid, in the container. In this case, the lithium adsorbent precursor after roasting needs to be granulated.

The method for producing the granulated body for lithium adsorption according to this embodiment includes the kneading step. In this kneading step, the powder of the lithium adsorbent precursor after roasting, the organic binder, and the hardening agent are kneaded to obtain the kneaded product. In the kneading step, while the powder of the lithium adsorbent precursor after roasting, the organic binder, and the hardening agent are kneaded, it is preferred that liquid, such as water, is added.

An amount of the organic binder used in the kneading step is preferably 5 weight% or more and 20 weight% or less of the powder of the lithium adsorbent precursor after roasting. When it is less than 5 weight%, the organic binder is too less and it does not bond. When it is more than 20 weight%, a proportion of the lithium adsorbent precursor after roasting contained in the granulated body in a final form is decreased, and it is not possible to obtain a predetermined adsorption capability. The amount of the organic binder falling within the range allows maintaining the adsorption capability of the lithium adsorbent at high. For an amount of the hardening agent, it is preferred that a preferable amount with respect to the organic binder is determined.

### (Granulating Step)

As depicted in Fig. 3, in the granulating step, a granulation is performed on the kneaded product obtained in the kneading step to obtain the granulated body. A size of the granulated body is not specifically limited, but it is preferred that the granularity of the granulated body is 0.5 mm or more and 1.5 mm or less such that the granularity of the granulated body for lithium adsorption that will be consequently obtained will be 0.5 mm or more and 1.5 mm or less. Whether the granularity of the granulated body according to this embodiment falls within the specific range or not can be verified, specifically, using a sieve with a mesh size corresponding to each granularity conforming to the JIS Z8801 standard. Note that it is not necessary that all of the granulated bodies have this granularity, and it is no problem as long as a preliminarily determined proportion is met. For example, it is preferred that the determined proportion is 90% or more. When the granularity is 0.5 mm or more, the granulated body is less likely to be clogged in the container, and thus an increase in pressure loss in the container can be inhibited when the granulated body of the present invention is filled in the container and is passed with water. When the granularity is larger than 1.5 mm, the adsorption rate of lithium becomes slow and the adsorption efficiency becomes poor, but the granularity of 1.5 mm or less allows high adsorption performance.

In the granulating step, the granulating, that is, extrusion is first performed, and the extruded objects are made into the granulated body by, for example, agitation and mixing granulation, rolling granulation, extrusion granulation, crushing granulation, fluidized bed granulation, spray-drying granulation (spray-dry), and compression granulation. The objects as they were extruded have corners in their shapes, and therefore removing the corners by the granulation allows reduced generation of fractions caused by damage when they are filled in a column and used. The granulated body is preferred to have a spherical shape. Having the spherical shape reduces pulverization caused by contact of the granulated bodies as they do not have edges. The granulated bodies granulated here are preferred to have approximately the same length in the X, Y, and Z directions (for example, the maximum length is less than three times the minimum length) when assuming the three mutually orthogonal coordinates of XYZ from the center of the granulated body.

The granularity of the granulated body for lithium adsorption falling within 0.5 mm or more and 1.5 mm or less allows further increasing a contact area between the granulated body for lithium adsorption and the lithium contained in the lithium-containing solution and allows reducing obstruction of the column.

### (Drying Step)

As depicted in Fig. 3, in this embodiment, the granulated body obtained in the granulating step is dried for a preliminarily determined time at 10°C or more and 60°C or less. The granulated body is thus dried so as to allow being put to the baking step with a small amount of water content in the granulated body, thereby obtaining the more robust granulated body.

The temperature of the drying step is preferred to be a room temperature. For example, it is more preferred to be 20°C or more and 30°C or less. The preliminarily determined time is preferred to be, for example, 20 hours or more and 30 hours or less.

### (Baking Step)

As depicted in Fig. 3, in the baking step, the granulated body obtained in the granulating step and undergone the drying step is baked to obtain the granulated body for lithium adsorption. The granulated body is baked by, for example, retaining a preliminarily determined temperature in an electric furnace for a preliminarily determined time, and thus turns into the granulated body for lithium adsorption. For these temperature and time, optimal values are determined by the used organic binder and hardening agent.

The temperature is preferred to be 90°C or more and 120°C or less, and more preferably, 100°C or more and 110°C or less. The retention time is preferred to be 0.5 hours or more and 2 hours or less.

### (Process after Baking Step and before Desorption Step)

The granulated body for lithium adsorption produced by the method for producing the granulated body for lithium adsorption is preferred to have the readily-soluble divalent manganese washed away by acid pickling or have hexavalent and heptavalent manganese washed away by alkaline washing before the subsequent desorption step that turns the lithium adsorbent precursor into the lithium adsorbent. For example, the acid pickling is preferred to be performed using 1 mol/L of hydrochloric acid having an amount of approximately 15 times an amount of the lithium adsorbent precursor. The alkaline washing is preferred to be performed by immersion in 1 mol/L of a lithium hydroxide solution for one hour. In this case, the lithium hydroxide solution is preferred to have an amount of 6 times an amount of the lithium adsorbent precursor. After the alkaline washing is terminated, it is preferred to perform pure water washing and drying.

### <Second Embodiment of Method for Producing Granulated Body for Lithium Adsorption>

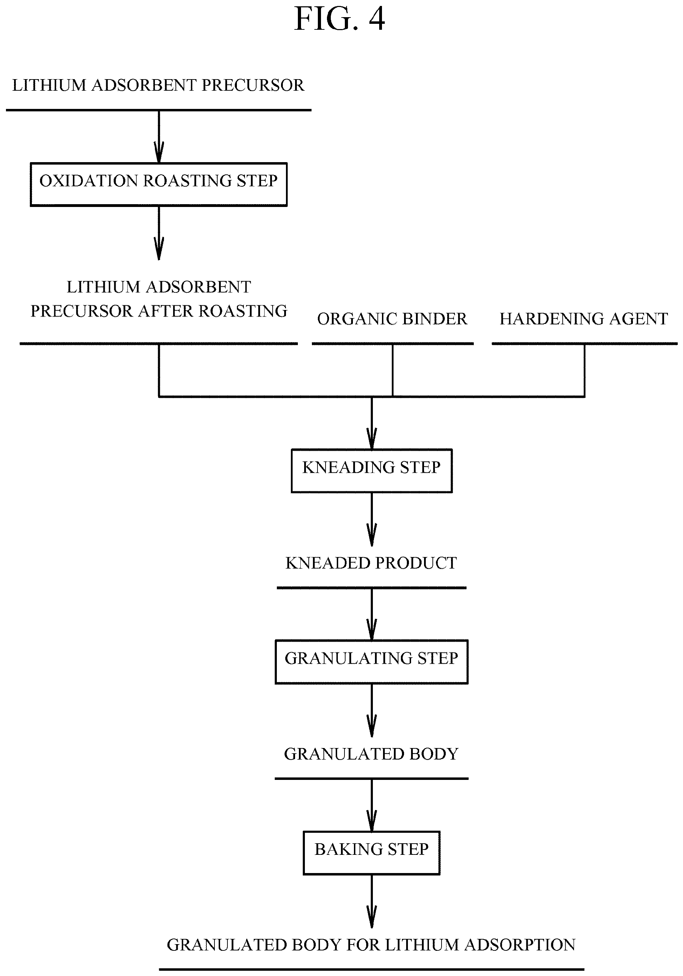

Fig. 4 depicts a flowchart of the method for producing the granulated body for lithium adsorption according to the second embodiment of the present invention. This embodiment differs from the first embodiment in that the drying step provided between the granulating step and the baking step is omitted. The others are the same as the first embodiment, and therefore are not further elaborated.

In this embodiment, the granulated body obtained in the granulating step is put to the baking step without undergoing the drying step. In this case, to reduce the water content in the granulated body, the material in the kneading step is adjusted and the temperature or the time in the baking step is adjusted.

### <Examples of Method for Producing Lithium Adsorbent Precursor after Roasting>

While the following describes specific examples of the method for producing the lithium adsorbent precursor after roasting according to the present invention, the present invention is not limited to these examples.

### <Example 1>

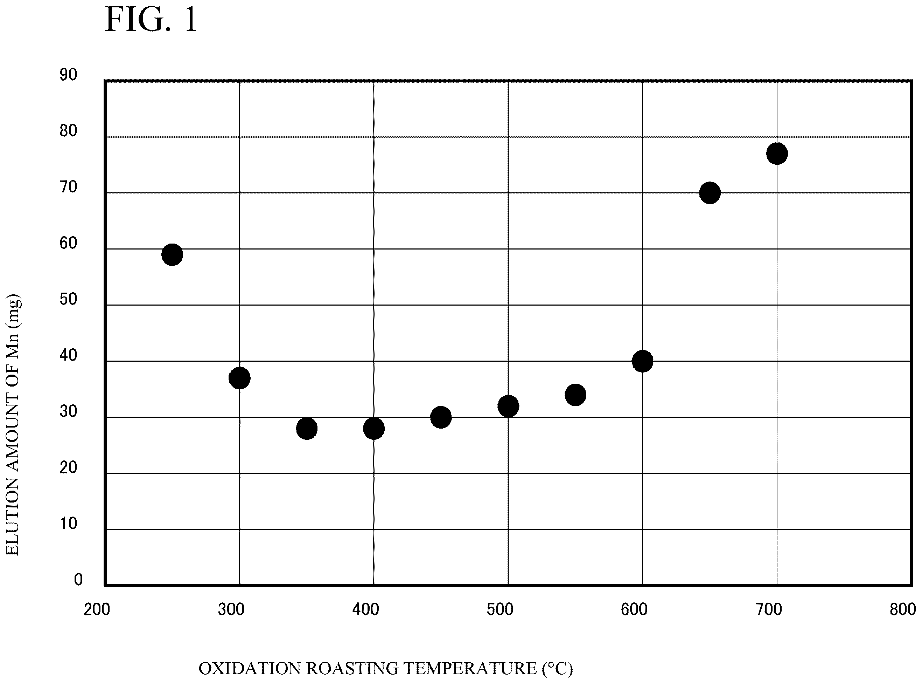

20 g of powdery lithium adsorbent precursor L_{1.6}Mn_{1.6}O₄ containing manganese produced by wet production method was prepared. The oxidation roasting step was performed on the lithium adsorbent precursor. That is, oxidation roasting was performed on the lithium adsorbent precursor using an electric furnace at 300°C for 5 hours. Through the oxidation roasting, the lithium adsorbent precursor after roasting was obtained. The obtained lithium adsorbent precursor after roasting was added to 300 ml of pure water and stirring was performed for 10 minutes. After the stirring, the supernatant was separated and an amount of manganese of the supernatant was measured with ICP emission spectrophotometer. Table 1 and Fig. 1 show the results.

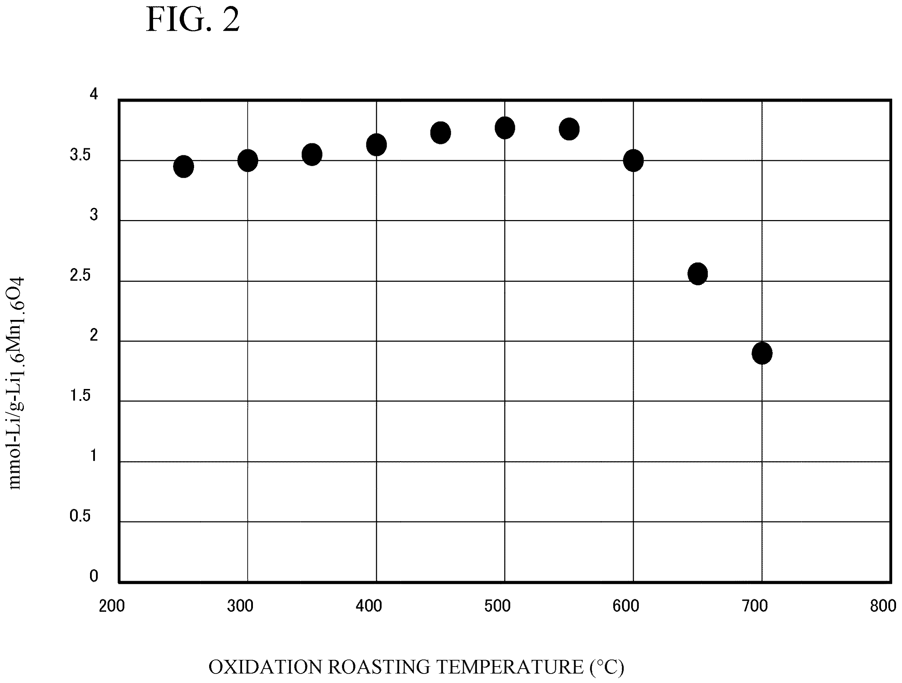

The lithium adsorbent precursor after roasting in the powdery form after the supernatant had been separated was brought into contact with hydrochloric acid as a process before adsorption to obtain a lithium adsorbent. The lithium adsorbent had 10 g. Using the lithium adsorbent, an adsorption step was performed on a lithium solution containing lithium at a concentration of 0.5%, and an eluting step was performed using hydrochloric acid at a concentration of 2% to measure the adsorption amount of lithium per unit weight of the lithium adsorbent. Table 1 and Fig. 2 show the results.

### <Example 2>

Except that the temperature in the oxidation roasting step was set to 350°C, the oxidation roasting step was performed under the conditions same as Example 1. Table 1 and Fig. 1 show the amount of manganese. Table 1 and Fig. 2 show the adsorption amount of lithium.

### <Example 3>

Except that the temperature in the oxidation roasting step was set to 400°C, the oxidation roasting step was performed under the conditions same as Example 1. Table 1 and Fig. 1 show the amount of manganese. Table 1 and Fig. 2 show the adsorption amount of lithium.

### <Example 4>

Except that the temperature in the oxidation roasting step was set to 450°C, the oxidation roasting step was performed under the conditions same as Example 1. Table 1 and Fig. 1 show the amount of manganese. Table 1 and Fig. 2 show the adsorption amount of lithium.

### <Example 5>

Except that the temperature in the oxidation roasting step was set to 500°C, the oxidation roasting step was performed under the conditions same as Example 1. Table 1 and Fig. 1 show the amount of manganese. Table 1 and Fig. 2 show the adsorption amount of lithium.

### <Example 6>

Except that the temperature in the oxidation roasting step was set to 550°C, the oxidation roasting step was performed under the conditions same as Example 1. Table 1 and Fig. 1 show the amount of manganese. Table 1 and Fig. 2 show the adsorption amount of lithium.

### <Example 7>

Except that the temperature in the oxidation roasting step was set to 600°C, the oxidation roasting step was performed under the conditions same as Example 1. Table 1 and Fig. 1 show the amount of manganese. Table 1 and Fig. 2 show the adsorption amount of lithium.

### <Comparative Example 1>

Except that the temperature in the oxidation roasting step was set to 250°C, the oxidation roasting step was performed under the conditions same as Example 1. Table 1 and Fig. 1 show the amount of manganese. Table 1 and Fig. 2 show the adsorption amount of lithium.

### <Comparative Example 2>

Except that the temperature in the oxidation roasting step was set to 650°C, the oxidation roasting step was performed under the conditions same as Example 1. Table 1 and Fig. 1 show the amount of manganese. Table 1 and Fig. 2 show the adsorption amount of lithium.

### <Comparative Example 3>

Except that the temperature in the oxidation roasting step was set to 700°C, the oxidation roasting step was performed under the conditions same as Example 1. Table 1 and Fig. 1 show the amount of manganese. Table 1 and Fig. 2 show the adsorption amount of lithium.

**[Table 1]**

| | | | | | | | | | | | |
|---|---|---|---|---|---|---|---|---|---|---|---|
| Oxidation Roasting Temperature | °C | 250 | 300 | 350 | 400 | 450 | 500 | 550 | 600 | 650 | 700 |
| Elution Amount of Mn | mg | 59 | 37 | 28 | 28 | 30 | 32 | 34 | 40 | 70 | 77 |
| Adsorption Amount of Li | mmol/g | 3.45 | 3.5 | 3.55 | 3.63 | 3.73 | 3.77 | 3.76 | 3.5 | 2.56 | 1.9 |

About the elution amount of manganese, the reference value was 40 mg. It is seen from Fig. 1 and Table 1 that the elution amount of manganese is reduced in Example 1 to Example 7, that is, the oxidation roasting temperature of 300°C or more and 600°C or less.

Regarding the adsorption amount of Li, the vertical axis of Fig. 2 represents the amount of obtained Li as mmol with respect to the grams of Li_{1.6}Mn_{1.6}O₄ as the lithium adsorbent precursor after roasting. The reference value at this time was 3.7 mmol/g. It is seen from Fig. 2 and Table 1 that in Example 4 to Example 6, that is, in the oxidation roasting temperature of 450°C or more and 550°C or less, the adsorption capability of Li can be maintained.

### <Examples of Method for Producing Granulated Body for Lithium Adsorption>

### <Example 1a>

### (Kneading Step)

900g of lithium manganese oxide Li_{1.6}Mn_{1.6}O₄ powder as the lithium adsorbent precursor after roasting of Example 6 of the method for producing lithium adsorbent precursor after roasting described above, that is, on which oxidation roasting was performed with the oxidation roasting temperature of 550°C was added into a kneading machine, and the kneading machine was rotated. Next, 451 g of a water-dispersion polyester resin (Vylonal MD-1500 manufactured by TOYOBO: copolyester content rate 30%) as an organic binder and 29 g of hexamethylene diisocyanate-based polyisocyanate (manufactured by Asahi Kasei Corp.: DURANATE WM44-L70G: blocked polyisocyanate content rate 60 to 70%) as a hardening agent were respectively weighted and added into the kneading machine. In this case, the organic binder is 135.3 g, which is 30% of 451 g, and is 15.03 weight% of 900 g of the lithium manganese oxide powder. The mixed powder was rotated for around 15 to 20 minutes in the kneading machine, and was mixed until the organic binder was entirely mixed to make a small amount of lump, and thus the kneaded product was obtained.

### (Granulating Step)

The kneaded product obtained by the kneading step was added into a granulating machine, and formed bodies in a cylindrical shape with a diameter of approximately 1 mm and a length of 1 mm were obtained. The formed body was added into a rolling granulation machine in rotation to undergo rolling granulation (particle size regulation) for approximately 3 to 10 seconds, and a granulated body of a diameter of approximately 1 mm was obtained.

### (Drying Step)

The granulated body obtained in the granulating step was bedded in a tray and was dried naturally for approximately one day under a normal temperature.

### (Baking Step)

The granulated body having undergone the drying step was subject to a heating process for 0.5 hours at a temperature of 90°C in an electric furnace, underwent a hardening process of the organic binder and the like, and thus the granulated body for lithium adsorption was obtained.

### (Desorption Step)

The granulated body for lithium adsorption having undergone the baking step was packed in a column, and was desorbed with 0.5 mol/L of hydrochloric acid. After the desorption, the column was passed with pure water and cleaned, and thus residual hydrochloric acid was removed.

### (Adsorption Step)

After undergoing the desorption step, the column packed with the granulated body for lithium adsorption was passed with salt lake brine having a predetermined lithium concentration, and the lithium adsorbent contained in the granulated body for lithium adsorption adsorbed Li contained in the salt lake brine. After passing the salt lake brine, pure water was passed through the column to remove the residual salt lake brine.

### (Elution Step)

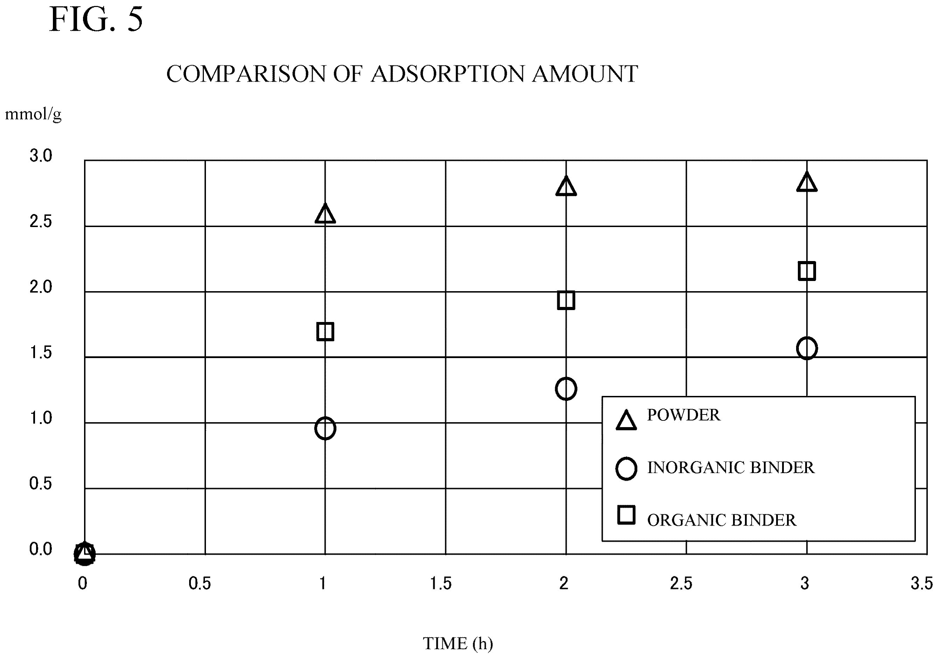

After the adsorption step, the column packed with the granulated body for lithium adsorption was passed with 0.5 mol/L of hydrochloric acid to elute the lithium adsorbed to the lithium adsorbent. Fig. 5 illustrates a graph of an amount of lithium eluted in the elution step. The horizontal axis in Fig. 5 indicates a time, and the vertical axis indicates a molar quantity of the lithium obtained with respect to the weight of the lithium adsorbent. The result of Example 1 is indicated by squares.

### (Repeat)

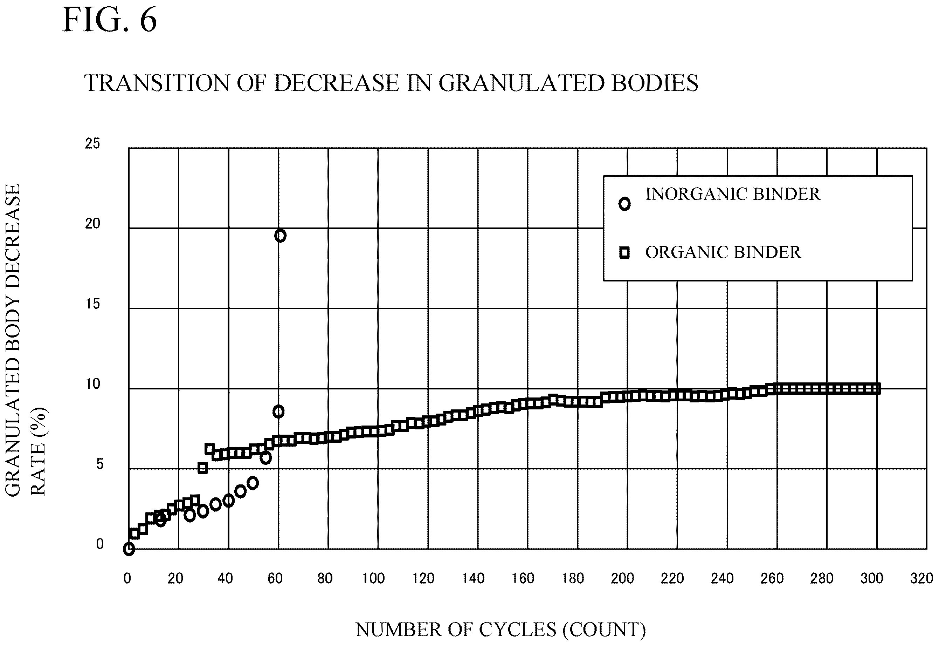

After performing the elution step, the column packed with the granulated body for lithium adsorption was used as it was, and the adsorption step and the elution step were repeatedly performed. Fig. 6 illustrates a proportion of those that failed to maintain their forms among the granulated bodies for lithium adsorption. The horizontal axis in Fig. 6 is the number of cycles, and the vertical axis indicates the proportion of those that failed to maintain their forms among the granulated bodies for lithium adsorption, namely, a granulated body decrease rate. The result of Example 1 using the copolyester is indicated by squares.

### <Comparative Example 1a>

### (Kneading Step)

Similarly to Example 1, 800g of lithium manganese oxide Li_{1.6}Mn_{1.6}O₄ powder as a lithium adsorbent precursor after roasting and 200 g of alumina as an inorganic binder were respectively weighted, and were put into a vinyl bag and mixed in advance. 1000 g of the mixture powder was added into a kneading machine, and the kneading machine was rotated while adding water. The kneading machine was rotated for a few minutes to entirely mix the water content, and thus the kneaded product was obtained.

### (Granulating Step)

The kneaded product obtained by the kneading step was added into an extruding granulator, and formed bodies in a cylindrical shape with a diameter of approximately 1 mm to 3 mm were obtained from holes. The formed pellets were cut to lengths of 3 mm to 6 mm.

### (Drying Step)

The formed bodies obtained in the granulating step were bedded in a tray, and were dried for approximately one day in a dryer at 80°C or more.

### (Sintering Step)

The formed bodies undergone the drying step were sintered at 500°C for 1.5 h in an electric furnace to obtain a sintered granulated body.

### (Desorption Step)

The sintered granulated body was packed in a column, and was desorbed with 1 mol/L of hydrochloric acid. After the desorption, the column was passed with pure water and cleaned to remove the residual hydrochloric acid.

### (Adsorption Step)

After undergoing the desorption step, the column packed with the sintered granulated body was passed with salt lake brine having a predetermined lithium concentration, and the lithium adsorbent contained in the granulated body for lithium adsorption adsorbed Li contained in the salt lake brine. After passing the salt lake brine, pure water was passed through the column to remove the residual salt lake brine.

### (Elution Step)

After the adsorption step, the column packed with the sintered granulated body was passed with 1 mol/L of hydrochloric acid to elute the lithium adsorbed to the lithium adsorbent. Fig. 5 illustrates an amount of lithium eluted in this elution step. The result of Comparative Example 1 is indicated by circles. In addition, the case where the lithium is adsorbed in the state of the lithium adsorbent powder is indicated by triangles for reference.

From Fig. 5, the adsorption capability of the granulated body for lithium adsorption using the copolyester as the organic binder has an adsorption amount of approximately around 2 mmol with respect to 1 g of lithium adsorbent precursor and is worse than that of the powder state, on the other hand, the sintered granulated body using alumina as the inorganic binder has an adsorption amount of approximately 1.3 mmol/g, and thus it is seen that the granulated body for lithium adsorption using the organic binder has the absorbing force higher than that of the inorganic binder.

### (Repeat)

After performing the elution step, the column packed with the sintered granulated body was used as it was, and the adsorption step and the elution step were repeatedly performed. Fig. 6 illustrates a proportion of those that failed to maintain their forms among the sintered granulated bodies. The result of Comparative Example 1 using the alumina is indicated by circles.

As shown in Fig. 6, the sintered granulated body formed by an inorganic alumina binder gradually proceeded to decay from around after 50 cycles and ended up rapidly proceeding to decay after 60 cycles. Meanwhile, the granulated body for lithium adsorption using the copolyester had its decrease rate at 10% even when 300 cycles were reached, and thus it was evident that the decay was hardly proceeded.

## Claims

1. A method for producing a lithium adsorbent precursor after roasting, comprising
an oxidation roasting step of performing oxidation roasting on powdery lithium adsorbent precursor containing manganese at 300°C or more and 600°C or less to obtain powdery lithium adsorbent precursor after roasting.

2. The method for producing the lithium adsorbent precursor after roasting according to claim 1, wherein
a temperature of the oxidation roasting in the oxidation roasting step is 450°C or more and 550°C or less.

3. A method for producing the granulated body for lithium adsorption, comprising:
a kneading step of kneading the lithium adsorbent precursor after roasting produced by the method for producing a lithium adsorbent precursor after roasting according to claim 1 or 2, an organic binder, and a hardening agent for accelerating hardening of the organic binder to obtain a kneaded product;
a granulating step of granulating the kneaded product to obtain a granulated body; and
a baking step of baking the granulated body at 90°C or more and 120°C or less to obtain a granulated body for lithium adsorption.

4. The method for producing the granulated body for lithium adsorption according to claim 3, comprising
a drying step of drying the granulated body at 10°C or more and 60°C or less after the granulating step and before the baking step.

5. The method for producing the granulated body for lithium adsorption according to claim 3 or 4, wherein
the organic binder is copolyester.

6. The method for producing the granulated body for lithium adsorption according to any of claims 3 to 5, wherein
the hardening agent is polyisocyanate.

7. The method for producing the granulated body for lithium adsorption according to any of claims 3 to 6, wherein
the organic binder is 5 weight% or more and 20 weight% or less of the powder of the lithium adsorbent precursor after roasting.
